# EUROPÄISCHE PATENTANMELDUNG

(11) **EP 4 462 615 A1**
(43) Veröffentlichungstag der Anmeldung: **13.11.2024**
(21) Anmeldenummer: 23172297.6
(22) Anmeldetag: 09.05.2023
(51) Int. Cl.: H01R 43/052

(54) **KABELVERARBEITUNGSMASCHINE UND VERFAHREN ZUM BETREIBEN EINER KABELVERARBEITUNGSMASCHINE**

(71) Anmelder: komax Holding AG, 6036 Dierikon (CH)
(72) Erfinder: WEBER, Bruno, 6275 Ballwil (CH)
(74) Vertreter: EGLI-EUROPEAN PATENT ATTORNEYS

(57) **Zusammenfassung**

Eine Kabelverarbeitungsmaschine (100) umfasst eine Crimppresse (150), wobei die Crimppresse (150) einen Prozess-Ort (P) umfasst, an welchem ein Crimpvorgang eines in der Crimppresse (150) befindlichen Crimpkontakts (20) auf einen Endbereich (11) eines Kabels (10) durchführbar ist; eine Kabel-Zuführeinrichtung (120) mit einem Kabelhalter (125), wobei der Kabelhalter (125) zum Greifen des Endbereichs (11) des Kabels (10) konfiguriert ist; und einen Kabelspitzensensor (160), der an der Crimppresse (150) an einem Erfassungs-Ort (E) fixiert ist, wobei der Erfassungs-Ort (E) in einer bekannten Positionsrelation zum Prozess-Ort (P) steht, und wobei der Kabelspitzensensor (160) zum Detektieren einer Kabelspitze (15) am Endbereich (11) des Kabels (10) in einer Sensorebene (162) des Kabelspitzensensors (160) konfiguriert ist, wobei die Kabel-Zuführeinrichtung (120) so konfiguriert ist, dass sie den Endbereich (11) des Kabels (10) zum Erfassungs-Ort (E) bewegt und die Kabelspitze (15) in Richtung der Sensorebene (162) des Kabelspitzensensors (160) bewegt, bis die Kabelspitze (15) in der Sensorebene (162) detektiert ist, und danach den Endbereich (11) des Kabels (10) zum Prozess-Ort (P) der Crimppresse (150) bewegt.

## Beschreibung

### Technisches Gebiet

Die vorliegende Offenbarung betrifft eine Kabelverarbeitungsmaschine und ein Verfahren zum Betreiben einer Kabelverarbeitungsmaschine.

### Stand der Technik

Für die Qualität einer Crimpverbindung ist es wünschenswert, dass eine Kabelspitze an einem Kabelende, das in einen zu vercrimpenden Crimpkontakt eingeführt wird, relativ genau zum Crimpkontakt bzw. innerhalb des Crimpkontakts ausgerichtet ist. Insbesondere ist eine möglichst genaue Lage der Kabelspitze in Längsrichtung (sogenannte Einlegetiefe) wünschenswert. Mögliche zu tolerierende Abweichungen in Längsrichtung bewegen sich beispielsweise in einem Bereich von 0,1 mm.

Aus EP 3 247 007 B1 ist ein Adapterplatte-Ausrichtlehre-System zum Halten eines Crimpwerkzeugs und zum Ausrichten des Crimpwerkzeugs an einer fest vorgegebenen Position relativ zur Ausrichtlehre bekannt. Eine Adapterplatte des bekannten Systems wird von Hand verschoben und fixiert, so dass die Kabelspitze im Crimpwerkzeug mit einiger Genauigkeit positioniert ist.

Aus WO 2021 148 981 A1 ist eine Kabelmaschine mit einer Kabelbearbeitungsstation bekannt, wobei eine bildgebende Sensoreinrichtung zum Detektieren eines Bildes eines Kabelendes eines eingeführten Kabels vorgesehen ist, um eine bilderkennungsgestützte Positionierung des Kabelendes vornehmen zu können.

### Technisches Problem

Es hat sich gezeigt, dass die Einlegetiefe während der laufenden Produktion nicht nur einer gewisse Streuung aufweist, sondern auch eine zeitlich abhängige Lageveränderung (Drift) auftritt. Es wird vermutet, dass diese Drift einer wärmebedingten Dehnung des Maschinengestells geschuldet ist.

Mit dem aus EP 3 247 007 B1 bekannten Adapterplatte-Ausrichtlehre-System kann einer solchen Drift keine Rechnung getragen werden, da das bekannte Adapterplatte-Ausrichtlehre-System nicht dazu geeignet ist, Veränderungen der räumlichen Lage der Kabelspitze im Produktionsbetrieb zu erfassen und zu korrigieren.

Die aus WO 2021 148 981 A1 bekannte Technologie ist in der Praxis schwierig zu realisieren, da der optische Sensor und die zugehörige aufwändige Beleuchtung nur mit hohem Aufwand ausreichend nahe an einer eine sichere Detektion gewährleistenden Position montiert werden können. Die Bildauswertung im Zuge der bilderkennungsgestützten Positionierung ist zudem rechenintensiv und zeitintensiv und benötigt zusätzliche leistungsstarke Hardware.

Es ist daher eine Aufgabe der vorliegenden Offenbarung, eine Kabelverarbeitungsmaschine oder ein Verfahren zum Betreiben einer Kabelverarbeitungsmaschine anzugeben, wobei eine sichere Ausrichtung des Kabelendes im Crimpkontakt, insbesondere Längsausrichtung, auch bei sich ändernden Umgebungsbedingungen gewährleistet ist.

### Umriss der Offenbarung

Eine Kabelverarbeitungsmaschine gemäss Anspruch 1 und ein Verfahren zum Betreiben einer Kabelverarbeitungsmaschine gemäss Anspruch 8 werden bereitgestellt.

Gemäss einem Aspekt umfasst eine Kabelverarbeitungsmaschine eine Crimppresse, eine Kabel-Zuführeinrichtung und einen Kabelspitzensensor. Die Crimppresse umfasst einen Prozess-Ort, an dem ein Crimpvorgang eines Crimpkontakts, der sich in der Crimppresse - beispielsweise einem Crimpwerkzeug oder Crimpwerkzeugteil der Crimppresse - befindet, auf einen Endbereich eines Kabels durchführbar ist. Die Kabel-Zuführeinrichtung umfasst einen Kabelhalter zum Halten des Endbereichs des Kabels. Beispielsweise ist der Kabelhalter als Kabelgreifer zum Greifen des Kabels ausgebildet. Der Endbereich des Kabels umfasst insbesondere einen Bereich des Kabels, bei dem die Kabellängsachse im Wesentlichen innerhalb einer Ebene verläuft. Der Kabelspitzensensor ist an einem Erfassungs-Ort fixiert, wobei der Erfassungs-Ort vom Prozess-Ort verschieden ist. Der Erfassungs-Ort steht in einer bekannten Positionsrelation zum Prozess-Ort, wobei die Positionsrelation beispielsweise eine Richtung und eine Entfernung umfasst, mithin also eine vektorielle Grösse darstellt. Der Kabelspitzensensor ist so konfiguriert, dass er das Vorhandensein oder Nichtvorhandensein einer Kabelspitze, die sich am Endbereich des Kabels befindet, in einer Sensorebene des Kabelspitzensensors detektiert. Die Kabel-Zuführeinrichtung ist so konfiguriert, dass sie den Endbereich des Kabels zum Erfassungs-Ort bewegt und die Kabelspitze in Richtung der Sensorebene des Kabelspitzensensors bewegt, bis die Kabelsitze in der Sensorebene detektiert ist, und danach den Endbereich des Kabels zum Prozess-Ort der Crimppresse bewegt. Das Bewegen der Kabelspitze in Richtung der Sensorebene umfasst insbesondere ein im Wesentlichen lineares Bewegen entlang der Kabellängsachse des Endbereichs des Kabels.

Der Prozess-Ort umfasst beispielsweise einen Prozess-Punkt oder einen Prozess-Bereich aus mehreren Punkten, wobei am Prozess-Ort ein Crimpwerkzeug auf den Crimpkontakt einwirkt, so dass dieser am Kabelende befestigt (aufgecrimpt) wird. Der Einrichtungs-Ort umfasst beispielsweise einen Einrichtungs-Punkt oder einen Einrichtungs-Bereich aus mehreren Punkten, wobei am Einrichtungs-Ort eine initiale Lage der Kabelspitze des Kabelendes für einen darauffolgenden Crimpvorgang hergestellt oder gewährleistet wird.

Mithilfe der bekannten Positionsrelation zwischen Prozess-Ort und Einrichtungs-Ort kann beispielsweise ein Sollwert für die Bewegung zum Prozess-Ort bestimmt oder korrigiert werden.

Gemäss einem Aspekt umfasst ein Verfahren zum Betreiben einer Kabelverarbeitungsmaschine, die wie hierin beschrieben konfiguriert ist, ein Bewegen, insbesondere ein Verschwenken, des Endbereichs des Kabels zum Erfassungs-Ort, ein Bewegen, insbesondere ein Vorschieben, der Kabelspitze in Richtung der Sensorebene des Kabelspitzensensors, und ein Bewegen, insbesondere ein Verschwenken, des Endbereichs des Kabels zum Prozess-Ort.

Vorteilhafte Weiterbildungen sind in den abhängigen Ansprüchen angegeben.

In Ausführungsformen umfasst die Kabel-Zuführeinrichtung einen Schwenkarm. Das Bewegen zum Erfassungs-Ort und das Bewegen zum Prozess-Ort umfasst beispielsweise jeweils ein Verschwenken mittels des Schwenkarms. Die Offenbarung ist aber nicht auf Kabelverarbeitungsmaschinen vom Schwenkarm-Typ beschränkt. Beispielsweise kann auch eine Kabelverarbeitungsmaschine vom Transfertyp zum Einsatz kommen. Das Bewegen zum Erfassungs-Ort und das Bewegen zum Prozess-Ort bei einer Kabelverarbeitungsmaschine vom Transfertyp umfasst beispielsweise eine Linearbewegung rechtwinklig zur Kabelachse.

In Ausführungsformen umfasst das Crimpwerkzeug einen ortsfesten Crimpwerkzeugteil und einen beweglichen Crimpwerkzeugteil. Mit anderen Worten: Das Crimpwerkzeug kann geteilt sein. Die Offenbarung ist aber nicht auf Crimpwerkzeuge vom geteilten Typ beschränkt. Beispielsweise kann auch ein einteiliges Crimpwerkzeug bzw. eine Crimppresse vorgesehen sein.

In Ausführungsformen ist der Kabelspitzensensor in einen Abfallkanal der Kabelverarbeitungsmaschine integriert sein. Ein Abfallkanal dient zur Aufnahme von Crimpkontakt-Abfallstücken wie z. B. Kontaktstreifenträger-Stücken, die während eines Crimpvorganges anfallen. Hier kann z. B. bei einer Kabelverarbeitungsmaschine vom Schwenktyp nach dem Crimpvorgang der mit dem Crimpkontakt versehene Endbereich des Kabels oberhalb des Kabelspitzensensors weggeschwenkt werden.

In Ausführungsformen umfasst der Kabelspitzensensor eine Einführungskontur, die zum Hinführen einer eingeführten Kabelspitze in Richtung der Sensorebene ausgebildet ist. Beispielsweise ist die Einführungskontur trichterförmig ausgebildet, so dass die Kabelspitze sicher die Sensorebene erreicht, beispielsweise bei einer leichten Biegung des Kabels am Endbereich. Dadurch kann auch leicht erkannt werden, wenn ein Endbereich zu stark gebogen ist, da in diesem Fall keine Detektion stattfindet.

In Ausführungsformen umfasst der Kabelspitzensensor in der Sensorebene eine Berührungsfläche. Die Berührungsfläche ist zur Kapazitäts- oder Induktivitätsmessung konfiguriert, beispielsweise mittels einer geeigneten Messelektronik, die mit der elektrisch leitfähigen Berührungsfläche verbunden ist. Insbesondere detektiert der Kabelspitzensensor mittels der Berührungsfläche eine Kapazitäts- oder Induktivitätsänderung, die mit einer Berührung der Berührungsfläche einer Kabelspitze einhergeht. Bei Detektion der Kapazitäts- oder Induktivitätsänderung hat die Kabelspitze die Sensorebene erreicht.

Alternativ umfasst in Ausführungsformen der Kabelspitzensensor in der Sensorebene einen optischen Detektor zur Detektion der Kabelspitze, beispielsweise und ohne Einschränkung einen Zeilensensor oder eine Lichtschranke. Bei Detektion der Kabelspitze hat diese die Sensorebene erreicht.

In Ausführungsformen umfasst das Verfahren weiter, und zwar vor dem Bewegen zum Erfassungsort, einen Kalibriervorgang, wobei der Kalibriervorgang ein Montieren einer Einrichtlehre am Prozess-Ort, ein Montieren eines Tastdorns am Kabelhalter der Kabel-Zuführeinrichtung, ein Bewegen des Tastdorns zum Bestimmen eines Vorschub-Endpunkts am Prozess-Ort, ein Bewegen des Tastdorns zum Bestimmen eines Winkels der Kabel-Zuführeinrichtung am Prozess-Ort und ein Bewegen des Tastdorns zum Bestimmen eines Vorschub-Endpunkts am Erfassungs-Ort auf. Die Einrichtlehre umfasst eine Tastkontur mit einer Kontur-Berührungsfläche und mit Kontur-Seitenflächen. Der Tastdorn wird zum Bestimmen des Vorschub-Endpunkts am Prozess-Ort in Richtung der Kontur-Berührungsfläche bewegt, insbesondere vorgeschoben, bis er diese erreicht, insbesondere berührt. Der Tastdorn wird zum Bestimmen des Winkels der Kabel-Zuführeinrichtung am Prozess-Ort in Richtung jeder Kontur-Seitenfläche bewegt, bis er die jeweilige Kontur-Seitenfläche erreicht, insbesondere berührt. Der Tastdorn wird zum Bestimmen des Vorschub-Endpunkts am Erfassungs-Ort in Richtung der Sensorebene bewegt, insbesondere vorgeschoben, bis er diese erreicht, insbesondere berührt.

### Kurze Beschreibung der Zeichnungen

Nachfolgend werden Ausführungsformen der Offenbarung unter Bezugnahme auf die Zeichnungen beschrieben, welche zeigen:
Fig. 1 eine perspektivische Ansicht einer Kabelverarbeitungsmaschine gemäss einer Ausführungsform;
Fig. 2 eine Draufsicht eines Crimpkontakts mit eingeführtem Endbereich eines Kabels;
Fig. 3 eine perspektivische Ansicht eines Ausschnitts der Kabelverarbeitungsmaschine aus Fig. 1;
Fig. 4 eine Draufsicht auf einen Ausschnitt der Kabelverarbeitungsmaschine aus Fig. 1;
Fig. 5 eine perspektivische Ansicht eines Ausschnitts der Kabelverarbeitungsmaschine aus Fig. 1;
Fig. 6 eine perspektivische Ansicht eines Ausschnitts der Kabelverarbeitungsmaschine aus Fig. 1 während eines Kalibriervorgangs;
Fig. 7 eine Draufsicht auf einen Ausschnitt der Kabelverarbeitungsmaschine aus Fig. 1 während des Kalibriervorgangs.

### Beschreibung von Ausführungsformen

Die Zeichnungen sind beispielhaft und nicht massstabsgetreu; gleiche oder gleichwirkende Merkmale sind in den Zeichnungen mit gleichen Bezugszeichen versehen, und deren wiederholte Beschreibung wird weggelassen. Merkmale in den Ausführungsformen können geeignet miteinander kombiniert oder weggelassen werden, wenn angemessen.

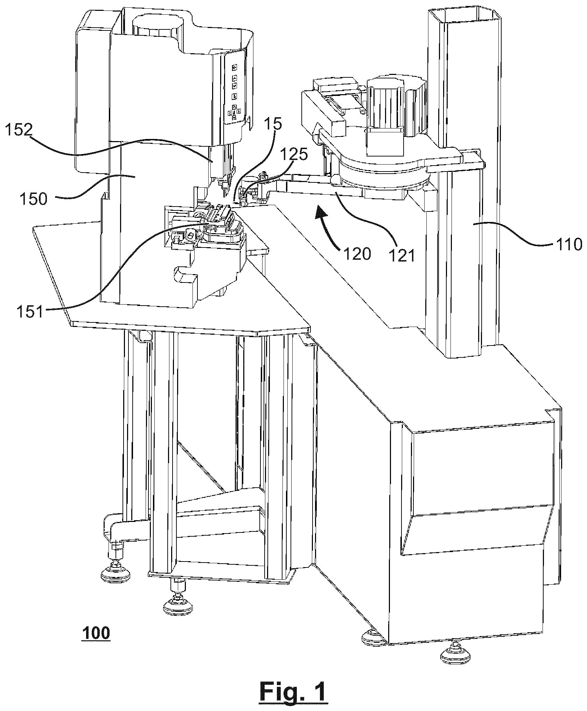

Fig. 1 zeigt eine perspektivische Ansicht einer Kabelverarbeitungsmaschine 100. An einem Maschinengestellt 110 ist eine Kabel-Zuführeinrichtung 120 befestigt, die vorliegend beispielhaft und nicht einschränkend als Schwenkarm 121 ausgebildet ist. Am Schwenkarm 121 ist ein Kabelhalter 125 befestigt, der vorliegend beispielhaft und nicht einschränkend als Kabelgreifer ausgebildet ist. Der Kabelhalter 125 hält ein eingeführtes Kabel 10 an dessen Endbereich 11. Am Endbereich 11 bildet eine Kabelspitze 15 den Abschluss des Kabels 10. Die Kabelverarbeitungsmaschine 100 umfasst weiter eine Crimppresse 150, die hier beispielhaft als zweiteilige Presse mit einem ortsfesten (unteren) Werkzeugteil 151 und einem beweglichen (oberen) Werkzeugteil 152 versehen ist. Das bewegliche Werkzeugteil 152 kann mittels der Crimppresse 150 auf das ortsfeste Werkzeugteil 151 zubewegt werden, um einen Crimpkontakt auf dem Endbereich 11 des Kabels 10 zu befestigen (aufzucrimpen) .

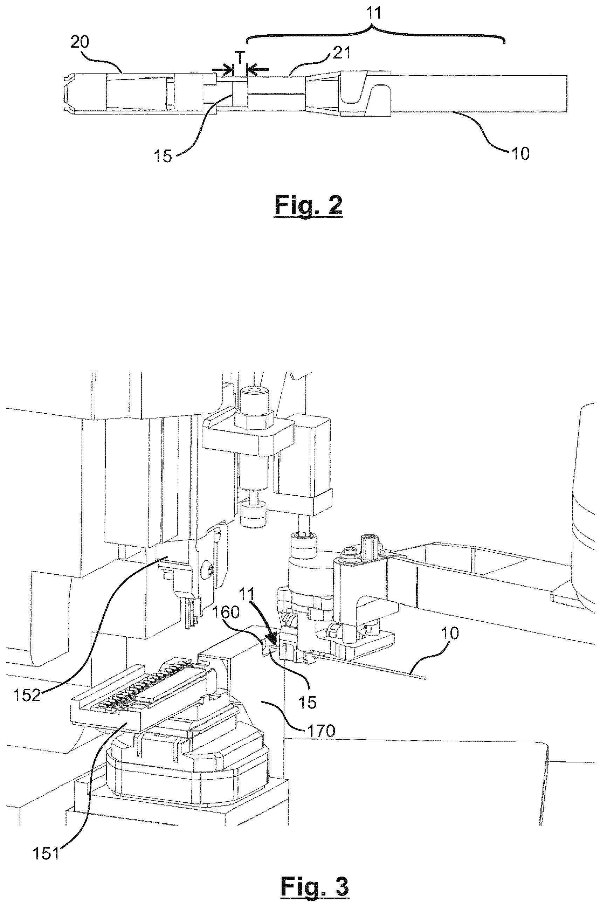

Fig. 2 zeigt vergrössert das Kabelende 11 des Kabels 10, das in einen Crimpkontakt 20 eingeführt ist. Die Crimpzone 21 dient zum Verbinden (Crimpen) durch Verpressen zwischen dem Kabelende 11 und dem Crimpkontakt 20. Die Kabelspitze 15, die den Abschluss des Kabelendes 11 bildet, befindet sich in einer Einlegetiefe T relativ zur Crimpzone 21. Für einen brauchbar vercrimpten Crimpkontakt 20 ist beispielsweise eine Genauigkeit der Einlegetiefe T von 0,1 mm oder weniger notwendig.

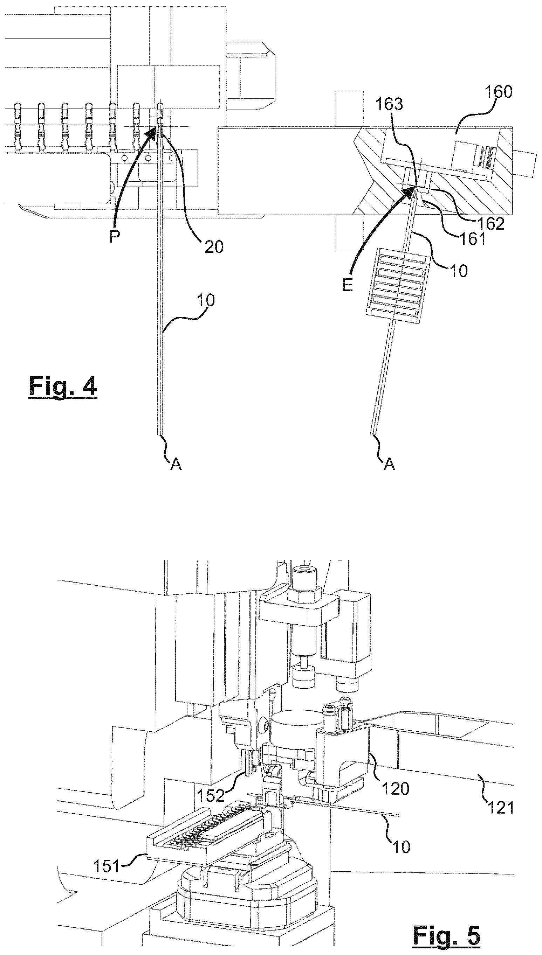

Fig. 3 zeigt eine perspektivische vergrösserte Ansicht eines Teils der Kabelverarbeitungsmaschine 100 aus Fig. 1. An der Crimppresse 150, beispielhaft und nicht einschränkend im dargestellten Beispiel an einem Abfallkanal 170 der Crimppresse 150, ist ein Kabelspitzensensor 160 montiert. Wie aus der Draufsicht in Fig. 4 ersichtlich, umfasst der Kabelspitzensensor eine Einführungskontur 161, hier beispielhaft trichterförmig, und eine Sensorebene 162, hier beispielhaft eine Berührungsfläche 163. Ein Erfassungs-Ort E, beispielsweise ein Erfassungs-Punkt, ist durch den Schnittpunkt der Kabellängsachse A des Kabels 10 mit der Sensorebene 162 gegeben. Die Kabelspitze 15 wird beim Erfassungs-Ort E positioniert, indem das Kabel 10 bzw. dessen Endbereich 11 mittels des Kabelhalters 125 in auf die Sensorebene 162 zubewegt wird, bis der Kabelspitzensensor 160 das Erreichen der Sensorebene 162 detektiert, hier beispielhaft also eine Berührung der Berührungsfläche 163 durch die Kabelspitze 15 detektiert. Eine solche Detektion kann beispielsweise durch Erfassen einer Induktivitäts- oder Kapazitätsänderung erfolgen. Der Kabelspitzensensor 160 ist angemessen empfindlich, so dass das Erreichen der Sensorebene 162 im Wesentlichen ohne eine Verformung der Kabelspitze 15 sicher detektiert wird. Statt der Berührungsfläche 163 kann auch ein optischer Detektor, beispielsweise ein Zeilensensor oder eine Lichtschranke (nicht dargestellt) verwendet werden.

Die Einführungskontur 161 ist im dargestellten Beispiel trichterförmig, ohne darauf beschränkt zu sein. Durch die Einführungskontur 161 kann auch ein leicht gebogener Endbereich 11 des Kabels 10 sicher zur Sensorebene 162 geführt werden. Falls das Kabel 10 am Endbereich 11 zu stark gebogen ist, kann dies erkannt werden, da in diesem Fall keine Detektion stattfindet.

Ebenfalls in Fig. 4 dargestellt ist das Kabel 10 in einer Prozessposition, in welcher das Vercrimpen stattfindet. Die Kabelspitze 15 befindet sich am Prozess-Ort P, beispielsweise einem Prozess-Punkt. Die Positionsrelation zwischen Prozess-Ort P und Erfassungs-Ort E (der Vektor vom Erfassungs-Ort E zum Prozess-Ort P) ist bekannt. Dadurch kann der Prozess-Ort P, nach der erfolgten Detektion der Kabelspitze 15 am Erfassungs-Ort E, sicher und präzise angefahren werden. Im Falle der dargestellten Kabelverarbeitungsmaschine 100 vom Schwenktyp führt der Kabelhalter 125 eine Schwenkbewegung und eine Linearbewegung in Kabelrichtung aus. Im Falle einer (nicht dargestellten) Kabelverarbeitungsmaschine vom Transfertyp würde der dort zugehörige Kabelhalter anstelle der Schwenkbewegung eine Linearbewegung im Wesentlichen senkrecht zur Kabellängsachse A durchführen.

Um die Position des Kabelhalters 125 zu regeln, ist im Falle einer Kabelverarbeitungsmaschine 100 vom Schwenktyp beispielsweise jeweils ein Sensormotor mit einem Encoder am Schwenkarm 121 vorgesehen, woraus die Position des Kabelhalters 125 und die notwendigen Trajektorien berechnet werden können. Der Prozess-Ort P kann je nach Typ des Crimpkontakts 20 variieren; dies ist allerdings einer zur Ausführung der Bewegungsvorgänge verwendeten Maschinensteuerung bekannt.

Während Fig. 3, wie oben beschrieben, das Kabelende 11 des Kabels 10 in der Position am Erfassungs-Ort E zeigt, zeigt die perspektivische Ansicht aus Fig. 5 das Kabelende 11 des Kabels 10 in der Position am Prozess-Ort P.

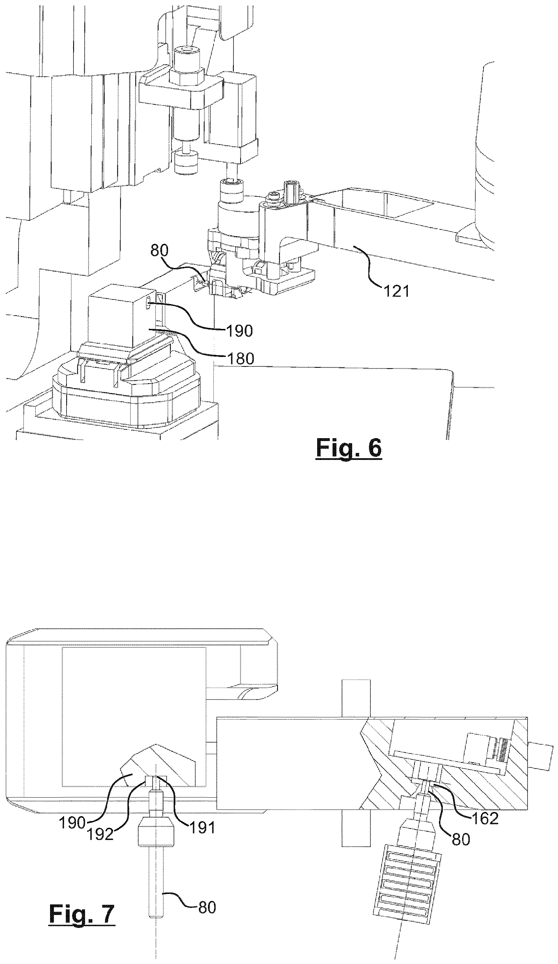

Fig. 6 zeigt einen Ausschnitt der Kabelverarbeitungsmaschine 100 analog zu Fig. 3, wobei jedoch für einen Einricht- bzw. Kalibriervorgang das Kabelende 11 durch einen Tastdorn 80 ersetzt wurde und der ortsfeste Teil des Crimpwerkzeugs 151 durch eine Einrichtlehre 180 ersetzt wurde. Mit dieser Konfiguration kann das Einrichten des Kabelspitzensensors 160 und das Bestimmen der Position der Crimppresse 150 auf der Maschine 100, mithin also die Prozessposition, vorgenommen werden. Die Einrichtlehre, die anstelle des ortsfesten Teils des Crimpwerkzeugs 151 in die Werkzeugaufnahme der Crimppresse 150 eingesetzt ist, umfasst eine nutförmige Tastkontur 190. Die Tastkontur 190 umfasst eine Kontur-Berührungsfläche in Richtung der Kabellängsachse A eines fiktiv dort eingeführten Kabels und zwei seitliche Berührungsflächen (Kontur-Seitenflächen) 192. Der Tastdorn 80 ist am Kabelhalter 125 montiert, der am Kabelspitzensensor 160 wie eine Kabelspitze 15 wirkt.

Der Tastdorn 80 wird in die Tastkontur 190 eingebracht und solange mittels des Kabelhalters 125 in Richtung der Kabellängsachse A des fiktiv eingeführten Kabels verfahren, bis er die Kontur-Berührungsfläche 191 erreicht. Diese Berührung wird geeignet detektiert, beispielsweise durch eine Erfassung des Motorstroms und/oder eine Erfassung des Drehmoments eines Servomotors, der für die Längsbewegung des Schwenkarms zuständig ist. Wenn die Berührung detektiert ist, ist der Vorschub-Endpunkt am Prozess-Ort P bestimmt.

Der Tastdorn 80 wird auch jeweils bis zum Erreichen der Kontur-Seitenflächen 192 bewegt; die Berührung der jeweiligen Kontur-Seitenfläche 192 wird, beispielsweise durch Erfassen des Motorstroms eines für die Schwenkbewegung zuständigen Schwenkmotors des Schwenkarms 121, erfasst; und wenn die Berührung detektiert ist, ist der Winkel der Kabel-Zuführeinrichtung 120 am Prozess-Ort P bestimmt.

Nachdem der Prozess-Ort derart bestimmt wurde, wird mit dem Tastdorn 80 der Kabelspitzensensor 160 ausgelöst; somit ist der Erfassungs-Ort E bestimmt.

## Patentansprüche

**1.** Kabelverarbeitungsmaschine (100), die Folgendes umfasst:
- eine Crimppresse (150), wobei die Crimppresse (150) einen Prozess-Ort (P) umfasst, an welchem ein Crimpvorgang eines in der Crimppresse (150) befindlichen Crimpkontakts (20) auf einen Endbereich (11) eines Kabels (10) durchführbar ist;
- eine Kabel-Zuführeinrichtung (120) mit einem Kabelhalter (125), wobei der Kabelhalter (125) zum Greifen des Endbereichs (11) des Kabels (10) konfiguriert ist;
- einen Kabelspitzensensor (160), der an der Crimppresse (150) an einem Erfassungs-Ort (E) fixiert ist, wobei der Erfassungs-Ort (E) in einer bekannten Positionsrelation zum Prozess-Ort (P) steht, und wobei der Kabelspitzensensor (160) zum Detektieren einer Kabelspitze (15) am Endbereich (11) des Kabels (10) in einer Sensorebene (162) des Kabelspitzensensors (160) konfiguriert ist;
wobei die Kabel-Zuführeinrichtung (120) so konfiguriert ist, dass sie den Endbereich (11) des Kabels (10) zum Erfassungs-Ort (E) bewegt und die Kabelspitze (15) in Richtung der Sensorebene (162) des Kabelspitzensensors (160) bewegt, bis die Kabelspitze (15) in der Sensorebene (162) detektiert ist, und danach den Endbereich (11) des Kabels (10) zum Prozess-Ort (P) der Crimppresse (150) bewegt.

**2.** Kabelverarbeitungsmaschine (100) nach Anspruch 1, wobei die Kabel-Zuführeinrichtung (120) einen Schwenkarm (121) umfasst.

**3.** Kabelverarbeitungsmaschine (100) nach Anspruch 2, wobei das Bewegen zum Erfassung-Ort (E) und das Bewegen zum Prozess-Ort (P) jeweils ein Verschwenken des Endbereichs (11) des Kabels (10) mittels des Schwenkarms (121) umfassen.

**4.** Kabelverarbeitungsmaschine (100) nach einem der vorhergehenden Ansprüche, wobei die Crimppresse (150) einen ortsfesten Crimpwerkzeugteil (151) und einen beweglichen Crimpwerkzeugteil (152) umfasst.

**5.** Kabelverarbeitungsmaschine (100) nach einem der vorhergehenden Ansprüche, wobei der Kabelspitzensensor (160) in einen Abfallkanal (170) integriert ist, wobei der Abfallkanal (170) zur Aufnahme von während eines Crimpvorgangs anfallender Crimpkontakt-Abfallstücke konfiguriert ist.

**6.** Kabelverarbeitungsmaschine (100) nach einem der vorhergehenden Ansprüche, wobei der Kabelspitzensensor (160) eine Einführungskontur (161) aufweist, die zum Hinführen einer eingeführten Kabelspitze (15) in Richtung der Sensorebene (162) ausgebildet ist.

**7.** Kabelverarbeitungsmaschine (100) nach einem der vorhergehenden Ansprüche, wobei der Kabelspitzensensor (160) in der Sensorebene (162) eine Berührungsfläche (163) zur Messung einer Kapazität oder einer Induktivität umfasst.

**7.** Kabelverarbeitungsmaschine (100) nach einem der Ansprüche 1 bis 6, wobei der Kabelspitzensensor (160) in der Sensorebene (162) einen optischen Detektor zur Detektion der Kabelspitze (15) umfasst.

**8.** Verfahren zum Betreiben einer Kabelverarbeitungsmaschine (100) nach einem der vorhergehenden Ansprüche, wobei das Verfahren umfasst:
- Bewegen, insbesondere Verschwenken, des Endbereichs (11) des Kabels (10) zum Erfassungs-Ort (E);
- Bewegen, insbesondere Vorschieben, der Kabelspitze (15) in Richtung der Sensorebene (162) des Kabelspitzensensors (160);
- Bewegen, insbesondere Verschwenken, des Endbereichs (11) des Kabels (10) zum Prozess-Ort (P).

**9.** Verfahren nach Anspruch 8, das vor dem Bewegen zum Erfassungs-Ort zusätzlich Folgendes umfasst:
- Montieren einer Einrichtlehre (180), die eine Tastkontur (190) mit einer Kontur-Berührungsfläche (191) und Kontur-Seitenflächen (192) aufweist, am Prozess-Ort (P);
- Montieren eines Tastdorns (80) am Kabelhalter (125) der Kabel-Zuführeinrichtung (120);
- Bewegen, mittels der Kabel-Zuführeinrichtung (120), des Tastdorns (80) bis zum Erreichen der Kontur-Berührungsfläche (191), zum Bestimmen eines Vorschub-Endpunkts am Prozess-Ort (P);
- Bewegen, mittels der Kabel-Zuführeinrichtung (120), des Tastdorns (80) bis zum Erreichen der Kontur-Seitenflächen (192), zum Bestimmen eines Winkels der Kabel-Zuführeinrichtung (120) am Prozess-Ort (P);
- Bewegen, mittels der Kabel-Zuführeinrichtung (120), des Tastdorns (80) zum Erfassungs-Ort (E), und Bewegen, insbesondere Vorschieben, des Tastdorns in Richtung der Sensorebene (162) des Kabelspitzensensors (160), zum Bestimmen eines Vorschub-Endpunkts am Erfassungs-Ort (E).
